Europäisches Patentamt

European Patent Office

Office européen des brevets

(19)

(11) Publication number: 0 034 343
A1

# EUROPEAN PATENT APPLICATION

(21) Application number: 81101000.8

(22) Date of filing: 12.02.81

(51) Int. Cl.³: C 08 F 10/00
C 08 F 4/64

(30) Priority: 13.02.80 JP 16419/80

(43) Date of publication of application:
26.08.81 Bulletin 81/34

(84) Designated Contracting States:
BE DE FR GB NL

(71) Applicant: TOYO STAUFFER CHEMICAL CO. LTD.
7-7, Akasaka 1-chome Minato-ku
Tokyo(JP)

(72) Inventor: Takahashi, Yoshikazu
No. 96, Maruyama-cho
Hikari-shi Yamaguchi-ken(JP)

(72) Inventor: Sunada, Yoichi
No. 2324-7, Ooaza Tonda
Shinnanyo-shi Yamaguchi-ken(JP)

(72) Inventor: Tokuhara, Toshiharu
No. 6771-4, Kongozan
Tokuyama-shi Yamaguchi-ken(JP)

(72) Inventor: Takitani, Masaru
No. 2612-76, Ooaza Fukugawa
Shinnanyo-shi Yamaguchi-ken(JP)

(74) Representative: Ter Meer-Müller-Steinmeister
Patentanwälte
Triftstrasse 4
D-8000 München 22(DE)

(54) Titanium trichloride catalytic component and process for the homo- or co-polymerization of alpha-olefins.

(57) Preparation of titanium trichloride as compound of a Ziegler type catalyst by a process comprising the following steps:

first step: Reducing titanium tetrachloride with an organic aluminium compound

second step: treating the resulting reduced solid, which is obtained by the first step, with an organic ether compound

third step: reacting the treated solid, which is obtained by the second step, with titanium tetrachloride

and carrying out the reaction of the first step in a single solvent of an aromatic compound or a mixed solvent of an aliphatic hydrocarbon and an aromatic compound.

Use of this compound in the polymerization of alpha-olefins.

COMPLETE DOCUMENT

Croydon Printing Company Ltd.

**0034343**

- 2 -

## Detailed Description of the Invention

This invention relates to a titanium trichloride catalytic
component having high activity usable for the manufacture
of $\alpha$-olefin polymers having high stereo-regularity and to a
process for the homo- or co-polymerization of $\alpha$-olefins
according to which $\alpha$-olefin polymers can be advantageously
produced in the presence of the titanium trichloride catalytic component and an organic aluminum compound.

More particularly, this invention relates to a titanium
trichloride catalytic component obtained by a method comprising the step of reducing titanium tetrachloride with
an organic aluminum compound represented by the general
formula of $AlR_nX_{3-n}$ (wherein R represents a hydrocarbon
radical containing 1 to 18 carbon atoms, X represents a
halogen atom and n is an optional number represented by
the formula of $0 < n \leq 3$) in an aromatic compound or a
mixture of at least one aliphatic hydrocarbon compound
and at least one aromatic compound  as solvent, the step
of subsequently treating the resulting reduced solid with an
organic ether compound and the step of reacting the treated
solid with titanium tetrachloride; and relates to a process
for the homo- or co-polymerization of $\alpha$-olefins in the
presence of a catalyst system prepared by combining the
titanium trichloride catalytic component with an organic
aluminum compound.

That is to say, this invention has the advantage that polymers of high stereo-regularity having for example high bulk
density can be obtained at high yield by using the titanium
trichloride catalytic component of the invention having a
highly uniform particle diameter, said average particle

- 3 -

diameter being freely controllable and said titanium trichloride catalytic component being without diminishing properties.

It has been proposed by the Japanese examined patent publication No. Sho 53-3356 etc. that after treating ß-type titanium trichloride, obtained by reducing titanium tetrachloride with an organic aluminum compound at low temperature, with an organic ether compound, a titanium trichloride catalytic component can be produced by converting its crystal type from ß-type to $\gamma$-type, together with reacting it with titanium tetrachloride. It is a generally known fact that polymers of high stereo-rgularity can, at high yield, be produced by polymerizing an $\alpha$-olefin in the presence of a catalyst prepared by combining said titanium trichloride catalytic component with an organic aluminum compound.

In case of preparing the titanium trichloride catalytic component by the method proposed in the Japanese patent examined publication No. Sho 53-3356 etc., the average particle diameter of the titanium trichloride catalytic component obtained is generally 25 to 35 μm, and in case of using said titanium trichloride catalytic component for the polymerization of an $\alpha$-olefin, the particle diameter of the resulting polymer becomes large, on account of the high activity of said titanium trichloride catalytic component. Accordingly a polymer of large particle diameter can be obtained so that a pelletizing process, whose object is the forming resulting polymer to granules, can be omitted, though depending on the polymerization process thereof.

- 4 -

On the other hand, in apparatus for preparing $\alpha$-olefin polymers designed so as to use a conventional titanium trichloride catalytic component,

i.e. a powder-like titanium trichloride catalytic component which is obtained by activating a solid product, produced by reducing titanium tetrachloride with metallic aluminum, through means of crushing said solid product or other means, are designed so as to handle a powder-like polymer, because the resulting poly-$\alpha$-olefin is also powdery. Accordingly, in case that the foresaid titanium trichloride catalytic component of high activity is employed in such an apparatus, it has often happened that operation-troubles arise by the reason of difficulties in transforming the resulting polymer from one process to another process in processes for producing polymer.

If it were possible to freely control the average particle diameter of titanium trichloride catalytic component without diminishing the characteristics that polymers of high stereo-regularity can be obtained at high yield by using said titanium trichloride catalytic component, the contribution of this process to industry relating to production of $\alpha$-olefin polymers were inestimable, because this process could be applied to many kind of processes ranging from the conventional process designed so as to use powder-like titanium trichloride catalytic component to the conventional process in which the step of pelletizing the polymer is omitted.

In view of controlling the average particle diameter of the titanium trichloride catalytic component, it is possible to control said average particle diameter by selecting the operating conditions of the reducing reaction when titanium tetrachloride is reduced with an

- 5 -

organic aluminum chloride in a solvent of, for example, an aliphatic hydrocarbon compound etc., but the range of controllable particle diameter is narrow, so that it cannot be the decisive means for achieving the above object.

The inventors have studied these problems and have found the following points to reach this invention.

This invention is characterized in that the reduction of titanium tetrachloride with the organic aluminum compound is carried out in a single solvent or a mixed solvent, wherein the average particle diameter of the resulting titanium trichloride catalytic component can be freely controlled in the range of 1 to 40 $\mu$m and, concurrently, a polymer of high stereo- regularity can be produced at high yield when polymerizing an $\alpha$-olefin using said titanium trichloride catalytic component.

The details of this invention are explained as follows. The aromatic compounds employed in this invention are both aromatic hydrocarbons and halogenated aromatic hydrocarbons, which are preferred to be in liquid state over the necessary range of temperature, like aliphatic hydrocarbons.

As the aromatic hydrocarbons, benzene and toluene and xylene are employed, and as the halogenated aromatic hydrocarbons, chlorobenzene, chlorotoluene and chloroxylene etc. are employed. As the aliphatic hydrocarbons, n-hexane, n-heptane, n-octane, n-dodecane and liquid paraffin etc. are employed.

The mixing ratio of the mixed solvent employed in this invention is optional and the average particle diameter of the resulting titanium trichloride catalytic component

- 6 -

is variable by the value of mixing ratio.

If toluene is selected as said aromatic hydrocarbon, the appearance of variation in the average particle diameter can be explained in particular as follows:

As it is explained in the examples of this specification, it is understood that the more increased the mixing ratio of the aromatic hydrocarbon compound to the aliphatic hydrocarbon compound is the smaller is the average particle diameter of the titanium trichloride catalytic component obtained.

The amount of titanium tetrachloride dissolved in the mixed solvent or the single solvent is not particularly limited, but from the standpoint of both operativity and productivity for producing the titanium trichloride catalytic component, generally the titanium tetrachloride is dissolved in an amount in the range of 0.01 to 5 moles per 1 liter of the single solvent or the mixed solvent .

If the titanium tetrachloride is dissolved in an amount of more than 5 moles per 1 liter of the single solvent or the mixed solvent, the concentration of the resulting slurry becomes high so that difficulties in stirring thereof are encountered, when the titanium trichloride is formed. On the contrary, if it is less than 0,01 mole, the amount of the resulting titanium trichloride is too low so that the productivity is lowered.

The organic aluminum compounds employed as reducing agent for reducing titanium tetrachloride are represented by the general formula $AlR_nX_{3-n}$ (R is a hydrocarbon

- 7 -

radical having of 1 to 18 carbon atoms, X is a halogen
atom and n is a number selected from the range of
$0 < n \leqq 3$).

To say concretely, trimethyl aluminum, triethyl aluminum,
tri-n-propyl aluminum, tri-n-butyl aluminum, tri-isobutyl
aluminum, tri-n-hexyl aluminum, tri-α-methylpentyl alu-
minum, tri-n-octyl aluminum, tri-n-decyl aluminum,
dimethyl aluminum chloride, diethyl aluminum chloride,
di-n-propyl aluminum chloride, di-isobutyl aluminum chloride, d-n-butyl aluminum chloride, methyl aluminum sesqui-
chloride, ethyl aluminum sesqui-chloride, n-propyl aluminum sesqui-chloride, isobutyl aluminum sesqui-chloride,
n-butyl aluminum sesqui-chloride, methyl aluminum dichloride, ethyl aluminum dichloride, n-propyl aluminum
dichloride, isobutyl aluminum dichloride, n-butyl aluminum
dichloride, diethyl aluminum fluoride, diethyl aluminum
bromide, diethyl aluminum iodide etc. can be employed.

When titanium tetrachloride is reduced with the organic
aluminum compound, the compound is usually added into
the simple solvent or the mixed solvent of the reducing
reaction as it is, or as a solution of 250 to 500 g of
the compound per 1 liter of the single solvent or the
mixed solvent.

It is necessary and enough for the organic aluminum compound to be added in the equivalent amount for reducing
the titanium tetrachloride to give titanium trichloride,
but the compound can be added in an excess amount.

It is necessary that the temperature at the time of reducing
the titanium tetrachloride should be controlled between
-100°C and 30°C, preferable between -50 and 20°C, more
particularly between -10°C and 5°C.

- 8 -

If the temperature is below -100°C, the reducing reaction becomes slow, so that the reaction requires a long time.

On the contrary, if the temperature is above 30°C, the titanium trichloride catalytic component having excellent properties can not be obtained.

It is further desirable that the reacting system is aged at the same temperature of 0.1 to 5 hours to complete the reducing reaction, after addition of the organic aluminum chloride.

The reduced solid obtained from the reducing reaction, the main component of which is titanium trichloride, is then treated with an organic ether compound.

The organic ether compounds, which can be employed in this invention, are compounds represented by the general formula of ROR' (wherein R and R' may be the same or different hydrocarbon radicals having a carbon number of 1 to 12) or cyclic organic ethers in which R and R' are linked.

To say concretely, aliphatic ethers such as diethyl ether, di-isopropyl ether, di-n-propyl ether, di-n-butyl ether, di-n-amyl ether, di-isoamyl ether, di-n-hexyl ether, di-n-octyl ether, di-n-decyl ether, di-n-dodecyl ether, n-amyl-n-butyl ether, n-amyl-isobutyl ether, n-butyl-n-propyl ether, n-butyl-isoamyl ether, n-propyl-n-hexyl ether, n-butyl-n-octyl ether etc., alicyclic ethers such as tetrahydrofuran and tetrahydropyran etc., and aromatic ethers such as diphenyl ether and anisol etc. can be used in particular di-n-butyl ether, di-n-amyl ether and di-isoamyl ether can be preferably employed.

- 9 -

The treatment of the reduced solid with the organic
ether compound can be carried out by means of heating
a suspension of the reduced solid in the organic ether
compound and so on. However, generally the reduced solid
is treated by adding and heating thereof in the above
mentioned single solvent or mixed solvent dissolving
the organic ether compound.

On the other hand, it is preferred that the amount of
the employed organic ether compound is 0,5 to 1,75 moles
per 1 mole of titanium trichloride contained in the
reduced solid, and temperature in the treatment is kept
between 0°C and 80°C.

The reduced solid obtained by reducing titanium tetrachloride with the organic aluminum compound at a low temperature, whose main component is titanium trichloride
having ß-type crystal structure, does not vary in the
crystal structure, even if the reduced solid is treated
with the organic ether compound. Moreover, the ß-type ti-
tanium trichloride has a low polymerization activity and
gives a lower yield of the stereo-regular polymer, so that
it can not be practically used as catalytic component for
the polymerization of x-olefins.

Accordingly, it is necessary that the crystal form of the
reduced solid should be changed from ß-type to $\gamma$-type
or $\delta$-type.

As the method for obtaining this, the reduced solid is usually
heat-treated in carbon tetrachloride, titanium tetrachloride
or a hydrocarbon compound dissolving 30 to 40 Vol.% of titanium tetrachloride. The treating conditions usually are
to heat the material for 1 to 3 hours at a temperature of
40 to 80°C.

- 10 -

After changing the crystal form thereof from ß-type to
γ- or δ-type by treatment with titanium tetrachloride
etc., the treated solid is recovered by filtration or
decantation, further washed with a hydrocarbon compound
to remove adhering titanium tetrachloride etc., and
dried to give the titanium trichloride catalytic component.

The titanium trichloride catalytic component obtained
by the above processes is approximately spherical and
has a particle diameter of excellent uniformity. The
titanium trichloride catalytic component can be preserved
in an inactive gas like nitrogen or in a state suspended
in a hydrocarbon.

The titanium trichloride catalytic component is combined
with an organic aluminium compound, which is like the
one employed in the foresaid reduction of titanium tetrachloride, to form a catalytic system for the polymerization of α-olefins.

The mixing ratio of the titanium trichloride catalytic
component and the organic aluminum compound in this case
can be selected in a wide range and freely decided by
the concerned persons, but it is usually suitable that
1 to 20 moles of the organic aluminum compound are employed per 1 mole of the titanium trichloride.

In carrying out the method for the homo- or co-polymeri-
zation of α-olefin according to this invention, an
electron donating agent, which is generally used, can
be further combined with the catalytic system.

In the polymerization method of this invention, a suspension polymerization process in which an aromatic hydrocarbon compound such as benzene, toluene, xylene etc.,

- 11 -

an aliphatic hydrocarbon compound such as hexane, heptane, octane etc. and an alicyclic hydrocarbon compound such as cyclohexane, cycloheptane and methyl cyclohexane etc. is employed as solvent, a liquid polymerization process in which a liquidized monomer is employed as solvent, or a gas phase polymerization process in which the monomer exists in the gaseous state can be used.

This invention will be explained by the following examples.

Furthermore, the polymerization activity (a), the heptane-insoluble ratio (H.I.), the isotactic index (I.I.), the average particle diameter of titanium trichloride (Dc) and the bulk density of the resulting polymer (f) represent the following:

a: weight of the resulting polymer per 1 g of the titanium trichloride catalytic component in unit hour (hr and at unit pressure (atm) (gPP/g Cata.hr.atm)

H.I.: $\dfrac{\text{weight of polymer insoluble in boiling n-heptane}}{\text{weight of solid polymer}}$

Dc: Average particle diameter of the titanium trichloride catalytic component calculated by averaging the values which are obtained by measurement of the particle diameter per 50 particles by means of a microscope (μm)

$\rho$: bulk density of polymer insoluble in boiling heptane, which is measured by A or B method in ASTM-D-1895-69 (g/ml).

- 12 -

Example 1

-Preparation of the titanium trichloride catalytic
 component-

Inside of a four neck separable flask having 2 l inside
volume equipped with stirrer was replaced with dry nitrogen, and 105 ml of a mixed solvent consisting of monochlorobenzene and n-hexane, wherein 50 Volume % of monochlorobenzene is blended, was introduced into the flask,
further followed by blending 70 ml of titanium tetrachloride (which corresponds to 40 Volume % of titanium tetrachloride). Then the reaction mixture was kept at 0°C under
stirring.

On the other hand, a dilute solution of diethyl aluminium
chloride, wherein 80 ml of diethyl aluminum chloride
(molar ratio of diethyl aluminium chloride to titanium
tetrachloride corresponds to 1.05) was dissolved in 240 ml
of a mixed solvent consisting of monochlorobenzene and
n-hexane in which 50 volume % of monochlorobenzene was
mixed, was added dropwise over period of 4 hours under
stirring into a flask whose inside was kept at 0°C.

After adding of the diethyl aluminium chloride dilute
solution, the reaction mixture was heated up to 65°C,
kept at 65°C for 2 hours and left alone to be cooled till
room temperature in order to complete the reduction of
titanium tetrachloride. The resultant reduced solid was
separated by filtration and was washed with n-hexane.
Thereafter, the solid was again introduced into a flask
together with 600 ml of n-hexane, and thereto 90 ml of
di-isoamyl ether was added dropwise over period of 1 hour.

After adding of the ether, the reaction mixture was
heated up to 70°C and was subjected to a treatment with
di-isoamyl ether at 70°C for 2 hours. After the treatment

- 13 -

with di-sioamyl ether, the treated solid was recovered
by filtration and washing. The recovered solid was again
suspended into 100 ml of n-hexane in the flask and 60 ml
of titanium tetrachloride was added thereto dropwise over a
period of 30 minutes. Subsequently, the inside of the flask
was heated up to 70°C and was treated at 70°C for 2 hours.

Thereafter, by carrying out filtering, washing and drying,
the titanium trichloride catalytic component, which was
spherical particle of excellent uniformity and whose
average particle diameter was approximately 7 μm, was ob-
tained.

-Polymerization of Propylene-

Into an autoclave having an inside volume of 5 l whose
inside was replaced with dry nitrogen gas, 50 ml of the
titanium trichloride catalytic component obtained by the
above preparation process, 1 ml of diethyl aluminium
monochloride and 2 kg of liquid propylene were charged
in atmosphere of dry nitrogen gas, and further 5 m mol of
hydrogen gas was introduced therein. Then, the inside temperature of the autoclave was raised up to 70°C by heating.

Following this, the polymerization of propylene was
carried out for 4 hours, keeping the inside temperature of
the autoclave at 70°C.

After completion of the polymerization reaction, propylene
gas remaining in the autoclave was purged out, and 100 ml
of isopropyl alcohol was poured thereinto to decompose
the titanium trichloride catalytic component. Suspension
of resultant polymer was filtered and the obtained filtered
cake was dried under reduced pressure to give 544 g of
dried solid polymer. The dried solid polymer was subjected
to extraction with boiling n-heptane for 18 hours by means

**0034343**

- 14 -

of a Soxhlet extractor to separate the polymer insoluble in boiling n-heptane and the polymer suluble therein.

Examples 2 to 5

Except that the composition of the mixed solvent consisting of monochlorobenzene and n-heptane was changed to the one shown in the following Tabel 1, the titanium trichloride catalytic component was prepared and propylene was polymerized thereby in the quite same process as in Example 1. The results are shown in Table 1.

Table 1

| Number of example | Preparation of the catalytic component | | Result of the polymerization | | | |
|---|---|---|---|---|---|---|
| | Concentration of monochlorobenzene (volume %) | Dc | a | H.I. | $\rho$ |
| 1 | 50 | 7 | 85 | 96 | 0.51 |
| 2 | 1 | 38 | 101 | 95 | 0.50 |
| 3 | 25 | 15 | 93 | 95 | 0.49 |
| 4 | 75 | 5 | 89 | 96 | 0.50 |
| 5 | 100 | 2 | 96 | 96 | 0.50 |

Example 6 to 9

Except that a mixed solvent of toluene and n-hexane was employed instead of the mixed solvent of monochlorobenzene and n-hexane, the titanium trichloride catalytic component was prepared and propylene was polymerized thereby, in the quite same process as disclosed in examples 1 to 5.

**0034343**

- 15 -

The results are shown in Table 2.

Table 2

| Number of example | Preparation of the catalytic component | | Result of the polymerization | | |
|---|---|---|---|---|---|
| | Concentration of toluene (volume %) | Dc | a | H.I. | $\rho$ |
| 6 | 25 | 14 | 99 | 94 | 0.47 |
| 7 | 50 | 6 | 97 | 96 | 0.52 |
| 8 | 75 | 4 | 88 | 95 | 0.51 |
| 9 | 100 | 2 | 91 | 93 | 0.49 |

Examples 10 to 13

Except that a mixed solvent of benzene and n-hexane was employed instead of the mixed solvent of monochlorobenzene and n-hexane, the titanium trichloride catalytic component was prepared and propylene was polymerized thereby, in the quite same process as shown in example 1 to 5.

- 16 -

The results are shown in Table 3.

Table 3

| Number of example | Preparation of the catalytic component | | Result of the polymerization | | | |
|---|---|---|---|---|---|---|
| | Concentration of benzene (volume %) | Dc | a | I.I. | $\rho$ | |
| 10 | 25 | 15 | 81 | 96 | 0.52 | |
| 11 | 50 | 11 | 92 | 93 | 0.48 | |
| 12 | 75 | 3 | 90 | 94 | 0.48 | |
| 13 | 100 | 1 | 98 | 94 | 0.51 | |

Examples 14 to 17

Except that a mixed solvent of monochlorobenzene and n-heptane was employed instead of the mixed solvent of monochlorobenzene and n-hexane, the titanium catalytic component was prepared and propylene was polymerized thereby, in the quite same process as referred to in examples 1 to 5.

– 17 –

The results are shown in Table 4.

Table 4

| Number of example | Preparation of the cata- lytic component | | Result of the polymerization | | |
| --- | --- | --- | --- | --- | --- |
| | Concentration of monochlorobenzene (volume %) | Dc | a | I.I. | $\rho$ |
| 14 | 1 | 41 | 111 | 95 | 0.52 |
| 15 | 25 | 18 | 94 | 95 | 0.50 |
| 16 | 50 | 7 | 89 | 95 | 0.50 |
| 17 | 75 | 4 | 90 | 95 | 0.49 |

– 18 –

CLAIMS

1. A titanium trichloride catalytic component prepared by a method comprising the step of reducing titanium tetrachloride with an organic aluminium compound represented by the general formula of $AlR_nX_{3-n}$ (wherein R represents a hydrocarbon radical containing 1 to 18 carbon atoms, X represents a halogen atom and n is an optional number represented by the formula of $0 < n \leq 3$), the step of treating the resultant reduced solid with an organic ether compound and the step of reacting the treated solid with titanium tetrachloride, c h a r a c t e - r i z e d in that the above reducing reaction is carried out in a single solvent of an aromatic compound or in a mixed solvent composed of an aliphatic hydrocarbon and an aromatic compound to deposit the reduced solid.

2. The titanium trichloride catalytic component according to claim 1, wherein the aromatic compound is an aromatic hydrocarbon.

3. The titanium trichloride catalytic component according to claim 1, wherein the aromatic compound is a halogenated aromatic hydrocarbon.

- 19 -

4. A process for the homo- or co-polymerization of α-olefins, c h a r a c t e r i z e d by carrying out the homo- or co-polymerization of α-olefins in the presence of a catalytic system comprising the combination of an organic aluminium compound with a titanium trichloride catalytic component obtained by a method comprising the step of reducing titanium tetrachloride with an organic aluminium compound represented by the general formula of $AlR_nX_{3-n}$ (wherein R represents a hydrocarbon radical containing 1 to 18 carbon atoms, X represents a halogen atom and n is an optional number represented by the formula of $0 < n \leq 3$), the step of treating the resultant reduced solid with an organic ether compound and the step of reacting the treated solid with titanium tetrachloride wherein the above reducing reaction is carried out in a single solvent of an aromatic compound or in a mixed solvent composed of an aliphatic hydrocarbon and an aromatic compound to deposit the reduced solid.

5. The process according to claim 4, wherein the aromatic compound is an aromatic hydrocarbon.

6. The process according to claim 4, wherein the aromatic compound is a halogenated aromatic hydrocarbon.

European Patent Office

**EUROPEAN SEARCH REPORT**

Application number

EP 81 10 1000

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 429 228 (TOYO STAUFFER) <br> * Claims 1,3,5,14; page 5, lines 21-29; page 7, line 11 - page 8, line 19; page 14, lines 2-10 * <br> & US - A - 4 251 388 (published 17-02-1981) <br> -- | 1,3,4, 6 | C 08 F 10/00 <br> 4/64 |
| | FR - A - 2 413 406 (TOYO STAUFFER) <br> * Claims 1,2,4,9; page 1, line 28 - page 2, line 4; page 7, line 1 - page 8, line 36; page 24, comparison example 4 * <br> & GB - A - 2 012 286 <br> -- | 1-6 | **TECHNICAL FIELDS SEARCHED (Int. Cl.³)** <br> C 08 F 10/00- <br> 10/14 <br> 110/00- <br> 110/14 <br> 210/00- <br> 210/16 <br> 4/64 <br> 4/62 |
| D | CA - A - 992 946 (SOLVAY) <br> * Claims 1-36 * <br> & JP - B - 78 3356 <br> -- | 1,4 | |
| | GB - A - 1 482 733 (SHELL) <br> * Claims 1-8 * <br> ---- | 1,2,4, 5 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> The Hague | Date of completion of the search <br> 21-05-1981 | Examiner <br> WEBER | |

EPO Form 1503.1 06.78